# EUROPEAN PATENT APPLICATION

(11) **EP 4 787 953 A1**
(43) Date of publication of application: **05.08.2026**
(21) Application number: 23953815.0
(22) Date of filing: 28.09.2023
(51) Int. Cl.: H04W 28/24

(54) **DOCUMENT UPDATING METHODS, AND APPARATUS**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Stöckeler, Ferdinand
(86) International application number: PCT/CN2023/122982
(87) International publication number: WO 2025/065671

(57) **Abstract**

The present disclosure provides document updating methods, an apparatus, devices, and a storage medium. A method comprises: updating a packet data unit (PDU) set quality of service (QoS) document of service information of a terminal. The present disclosure can improve the matching of QoS documents and wireless resources, thereby improving service quality.

## Description

### TECHNICAL FIELD

The disclosure relates to the field of communication technologies, and in particular to a method and an apparatus for updating a profile, a device, and a storage medium.

### BACKGROUND

Services such as mobile media-type services, extended reality (XR) services including cloud augmented reality (AR) or virtual reality (VR), cloud gaming, and video-based remote control of machines or drones generate an increasing amount of traffic on the network. The XR services also involve multimodal data streams. XR and media (XRM) services and interactive media services require a 5th generation mobile communication technology system (5GS) to comprehensively consider quality of service (QoS) characteristics of related service data flows (SDFs).

### SUMMARY

The disclosure provides a method and an apparatus for updating a profile, a device, and a storage medium, to improve matching between a quality of service (QoS) profile and radio resources, thus improving service quality.

According to a first aspect of embodiments of the disclosure, a method for updating a profile is provided. The method includes: updating a packet data unit (PDU) set QoS profile of service information of a terminal.

According to a second aspect of embodiments of the disclosure, a method for updating a profile is provided. The method includes: receiving an updated PDU set QoS profile sent by an access network device; and sending PDU set QoS profile indication information to a session management function (SMF), in which the PDU set QoS profile indication information indicates the updated PDU set QoS profile.

According to a third aspect of embodiments of the disclosure, a method for updating a profile is provided. The method includes: receiving PDU set QoS profile indication information sent by an access and mobility management function (AMF), in which the PDU set QoS profile indication information indicates an updated PDU set QoS profile.

According to a fourth aspect of embodiments of the disclosure, an access network device is provided. The access network device includes: a processing module, configured to update a PDU set QoS profile of service information of a terminal.

According to a fifth aspect of embodiments of the disclosure, a first network element is provided. The first network element includes: a transceiver module, configured to receive an updated PDU set QoS profile sent by an access network device, in which the transceiver module is further configured to send PDU set QoS profile indication information to a session management function (SMF), in which the PDU set QoS profile indication information indicates the updated PDU set QoS profile.

According to a sixth aspect of embodiments of the disclosure, a second network element is provided. The second network element includes: a transceiver module, configured to receive PDU set QoS profile indication information sent by an AMF, in which the PDU set QoS profile indication information indicates an updated PDU set QoS profile.

According to a seventh aspect of embodiments of the disclosure, an access network device is provided. The access network device includes: one or more processors, in which the access network device is configured to implement the method according to the first aspect.

According to an eighth aspect of embodiments of the disclosure, a first network element is provided. The first network element includes: one or more processors, in which the first network element is configured to implement the method according to the second aspect.

According to a ninth aspect of embodiments of the disclosure, a second network element is provided. The second network element includes: one or more processors, in which the second network element is configured to implement the method according to the third aspect.

According to a tenth aspect of embodiments of the disclosure, a communication system is provided. The communication system includes: a terminal, an access network device, configured to implement the method according to any embodiment of the first aspect, and a core network device, configured to implement the method according to any embodiment of the second aspect.

According to an eleventh aspect of embodiments of the disclosure, a storage medium is provided. The storage medium stores instructions, in which the instructions, when executed on a communication device, cause the communication device to implement the method according to the first aspect, the method according to the second aspect, or the method according to the third aspect.

According to a twelfth aspect of embodiments of the disclosure, a communication method is provided. The method includes: an access network device, configured to update a PDU set QoS profile of service information of a terminal, in which the access network device is further configured to execute an updated PDU set QoS profile, and send the updated PDU set QoS profile to an AMF; an AMF, configured to receive the updated PDU set QoS profile sent by the access network device, in which the AMF is further configured to send PDU set QoS profile indication information to an SMF, in which the PDU set QoS profile indication information indicates the updated PDU set QoS profile; and an SMF, configured to receive the PDU set QoS profile indication information sent by the AMF.

### BRIEF DESCRIPTION OF THE DRAWINGS

The above-mentioned and/or additional aspects and advantages of the disclosure will become apparent and readily appreciated from the following description of embodiments, taken in combination with the accompanying drawings.
FIG. 1 is a schematic diagram illustrating an architecture of a communication system according to an embodiment of the disclosure.
FIG. 2A is an interaction schematic diagram illustrating a method for updating a profile according to an embodiment of the disclosure.
FIG. 2B is an interaction schematic diagram illustrating a method for updating a profile according to an embodiment of the disclosure.
FIG. 3A is a flowchart illustrating a method for updating a profile according to an embodiment of the disclosure.
FIG. 4A is a flowchart illustrating a method for updating a profile according to an embodiment of the disclosure.
FIG. 5A is a flowchart illustrating a method for updating a profile according to an embodiment of the disclosure.
FIG. 6A is a flowchart illustrating a method for updating a profile according to an embodiment of the disclosure.
FIG. 7A is a flowchart illustrating a method for updating a profile according to an embodiment of the disclosure.
FIG. 8A is a block diagram illustrating a communication system according to an embodiment of the disclosure.
FIG. 9A is a block diagram illustrating an access network device according to an embodiment of the disclosure.
FIG. 9B is a block diagram illustrating a first network element according to an embodiment of the disclosure.
FIG. 9C is a block diagram illustrating a second network element according to an embodiment of the disclosure.
FIG.10A is a block diagram illustrating a communication device according to an embodiment of the disclosure.
FIG. 10B is a block diagram illustrating a chip according to an embodiment of the disclosure.

### DETAILED DESCRIPTION

The disclosure provides a method and an apparatus for updating a profile, a device, and a storage medium, to improve matching between a quality of service (QoS) profile and radio resources, thus improving service quality.

According to a first aspect of embodiments of the disclosure, a method for updating a profile is provided. The method includes: updating a packet data unit (PDU) set QoS profile of service information of a terminal.

In the above embodiments, a mechanism for updating a profile is provided, which may improve matching between a QoS profile and resource demand and allocation when radio resources change dynamically, reduce unreasonable resource allocation when QoS cannot be fulfilled due to dynamic changes of radio resources, satisfy QoS allocation, improve matching between the QoS profile and the radio resources, and improve service quality.

In some embodiments in combination with the first aspect, in some embodiments, updating the PDU set QoS profile of the service information of the terminal includes: selecting a new PDU set QoS profile from an alternative PDU set QoS set.

In the above embodiments, the new PDU set QoS profile may be selected from the alternative PDU set QoS set, which may fulfill end-to-end QoS requirements when radio resources change dynamically, improve adaptability to resource demand and resource allocation, and improve service quality.

In some embodiments in combination with the first aspect, in some embodiments, selecting the new PDU set QoS profile from the alternative PDU set QoS set includes: selecting the new PDU set QoS profile from the alternative PDU set QoS set by at least one of the following triggering modes: a PDU set QoS event triggering mode; a resource status triggering mode; a network congestion status triggering mode; a configuration triggering mode; or an operator policy triggering mode.

In the above embodiments, the mechanism for updating a profile is provided, different triggering modes may be provided when radio resources change dynamically, which may reduce unreasonable resource allocation when QoS cannot be fulfilled due to dynamic changes of radio resources, improve matching between the QoS profile and the radio resources, and improve service quality.

In some embodiments in combination with the first aspect, in some embodiments, any PDU set QoS profile in the alternative PDU set QoS set includes at least one of the following parameters: a packet set delay budget; a packet set error rate; a guaranteed bit rate (GBR); an averaging window; or a maximum data burst volume.

In the above embodiments, a parameter set of any PDU set QoS profile in the alternative PDU set QoS set is provided, parameters of any PDU set QoS profile in the alternative PDU set QoS set are clarified, accuracy of determining the new PDU set QoS profile may be improved, thus improving matching between the QoS profile and the radio resources, and improving service quality.

In some embodiments in combination with the first aspect, in some embodiments, the method further includes: executing an updated PDU set QoS profile, and sending the updated PDU set QoS profile to the terminal.

In the above embodiments, a profile transmission mechanism is provided, end-to-end QoS requirements may be effectively fulfilled, adaptability of resource demand and allocation may be improved, thus coordinating end-to-end QoS resources, and improving service quality.

In some embodiments in combination with the first aspect, in some embodiments, the method further includes: executing an updated PDU set QoS profile, and sending the updated PDU set QoS profile to an access and mobility management function (AMF).

In the above embodiments, a profile transmission mechanism is provided, end-to-end QoS requirements may be effectively fulfilled, adaptability of resource demand and allocation may be improved, thus coordinating end-to-end QoS resources, and improving service quality.

In some embodiments in combination with the first aspect, in some embodiments, sending the updated PDU set QoS profile to the AMF includes: in a case that a guaranteed bit rate (GBR) QoS flow is configured with PDU set related notification control, and it is determining that PDU set QoS targets of a QoS flow cannot be fulfilled or PDU set QoS targets of a QoS flow are fulfilled again, sending a first message to the AMF, in which the first message includes at least one of: a PDU session identifier (ID) or N2 session management (SM) information.

In the above embodiments, a profile transmission mechanism is provided, accuracy of profile transmission may be improved, end-to-end QoS requirements may be effectively fulfilled, adaptability of resource demand and resource allocation may be improved, thus coordinating end-to-end QoS resources, and improving service quality.

In some embodiments in combination with the first aspect, in some embodiments, the N2 SM information includes at least one of: a QoS flow identity (QFI); first indication information indicating that the PDU set QoS targets of the QoS flow cannot be fulfilled; or second indication information indicating that the PDU set QoS targets of the QoS flow are fulfilled again.

In some embodiments in combination with the first aspect, in some embodiments, in a case that it is determined that the PDU set QoS targets of the QoS flow cannot be fulfilled, the N2 SM information indicates a reference to an alternative PDU set QoS profile matching values of PDU set QoS parameters currently being fulfilled by a next generation access network device.

In some embodiments in combination with the first aspect, in some embodiments, the method further includes: receiving a second message sent by the AMF, in which the second message includes N1 SM container information.

According to a second aspect of embodiments of the disclosure, a method for updating a profile is provided. The method includes: receiving an updated PDU set QoS profile sent by an access network device; and sending PDU set QoS profile indication information to a session management function (SMF), in which the PDU set QoS profile indication information indicates the updated PDU set QoS profile.

In the above embodiments, a profile transmission mechanism is provided, accuracy of profile transmission may be improved, end-to-end QoS requirements may be effectively fulfilled, adaptability of resource demand and allocation may be improved, thus coordinating end-to-end QoS resources, and improving service quality.

In some embodiments in combination with the second aspect, in some embodiments, receiving the updated PDU set QoS profile sent by the access network device includes: in a case that a GBR QoS flow is configured with PDU set related notification control, and the access network device determines that PDU set QoS targets of a QoS flow cannot be fulfilled or PDU set QoS targets of a QoS flow are fulfilled again, receiving a first message sent by the access network device, in which the first message includes at least one of: a PDU session identifier or N2 SM information; and sending the first message to the SMF.

In some embodiments in combination with the second aspect, in some embodiments, the method further includes: receiving a third message sent by the SMF in response to the first message; and sending a second message to the access network device, in which the second message includes N1 SM container information.

In the above embodiments, a profile transmission mechanism is provided, accuracy of profile transmission may be improved, end-to-end QoS requirements may be effectively fulfilled, adaptability of resource demand and allocation may be improved, thus coordinating end-to-end QoS resources, and improving service quality.

In some embodiments in combination with the second aspect, in some embodiments, the third message includes at least one of: the N2 SM information; non access stratum (NAS) information; or the N1 SM container information.

According to a third aspect of embodiments of the disclosure, a method for updating a profile is provided. The method includes: receiving PDU set QoS profile indication information sent by an AMF, in which the PDU set QoS profile indication information indicates an updated PDU set QoS profile.

In the above embodiments, a profile transmission mechanism is provided, accuracy of profile transmission may be improved, end-to-end QoS requirements may be effectively fulfilled, adaptability of resource demand and allocation may be improved, thus coordinating end-to-end QoS resources, and improving service quality.

In some embodiments in combination with the third aspect, in some embodiments, the method further includes: subscribing, by a policy control function (PCF), to an update event for a PDU set QoS profile; and sending a fourth message to the PCF, in which the fourth message includes the updated PDU set QoS profile.

In the above embodiments, a profile transmission mechanism is provided, the updated PDU set QoS profile may be sent to the PCF, accuracy of profile transmission may be improved, end-to-end QoS requirements may be effectively fulfilled, adaptability of resource demand and allocation may be improved, thus coordinating end-to-end QoS resources, and improving service quality.

In some embodiments in combination with the third aspect, in some embodiments, the method further includes: subscribing, by an application function (AF), to the PDU set QoS profile; and reporting the updated PDU set QoS profile to the AF.

In the above embodiments, a profile transmission mechanism is provided, the updated PDU set QoS profile may be sent to the AF, accuracy of profile transmission may be improved, end-to-end QoS requirements may be effectively fulfilled, adaptability of resource demand and allocation may be improved, thus coordinating end-to-end QoS resources, and improving service quality.

In some embodiments in combination with the third aspect, in some embodiments, the method further includes: in a case that a GBR QoS flow is configured with PDU set related notification control, and an access network device determines that PDU set QoS targets of a QoS flow cannot be fulfilled or PDU set QoS targets of a QoS flow are fulfilled again, receiving a first message sent by the AMF, in which the first message includes at least one of: a PDU session identifier or N2 SM information.

In some embodiments in combination with the third aspect, in some embodiments, the N2 SM information includes at least one of: a QFI; first indication information indicating that the PDU set QoS targets of the QoS flow cannot be fulfilled; or second indication information indicating that the PDU set QoS targets of the QoS flow are fulfilled again.

In some embodiments in combination with the third aspect, in some embodiments, the method further includes: sending a third message to the AMF in response to the first message, in which the third message includes at least one of: the N2 SM information; NAS information; or N1 SM container information.

According to a fourth aspect of embodiments of the disclosure, an access network device is provided. The access network device includes: a processing module, configured to update a PDU set QoS profile of service information of a terminal.

According to a fifth aspect of embodiments of the disclosure, a first network element is provided. The first network element includes: a transceiver module, configured to receive an updated PDU set QoS profile sent by an access network device, in which the transceiver module is further configured to send PDU set QoS profile indication information to a session management function (SMF), in which the PDU set QoS profile indication information indicates the updated PDU set QoS profile.

According to a sixth aspect of embodiments of the disclosure, a second network element is provided. The second network element includes: a transceiver module, configured to receive PDU set QoS profile indication information sent by an AMF, in which the PDU set QoS profile indication information indicates an updated PDU set QoS profile.

According to a seventh aspect of embodiments of the disclosure, an access network device is provided. The access network device includes: one or more processors, in which the access network device is configured to implement the method according to the first aspect.

According to an eighth aspect of embodiments of the disclosure, a first network element is provided. The first network element includes: one or more processors, in which the first network element is configured to implement the method according to the second aspect.

According to a ninth aspect of embodiments of the disclosure, a second network element is provided. The second network element includes: one or more processors, in which the second network element is configured to implement the method according to the third aspect.

According to a tenth aspect of embodiments of the disclosure, a communication system is provided. The communication system includes: a terminal, an access network device, configured to implement the method according to any embodiment of the first aspect, and a core network device, configured to implement the method according to any embodiment of the second aspect.

According to an eleventh aspect of embodiments of the disclosure, a storage medium is provided. The storage medium stores instructions, in which the instructions, when executed on a communication device, cause the communication device to implement the method according to the first aspect, the method according to the second aspect, or the method according to the third aspect.

According to a twelfth aspect of embodiments of the disclosure, a communication method is provided. The method includes: an access network device, configured to update a PDU set QoS profile of service information of a terminal, in which the access network device is further configured to execute an updated PDU set QoS profile, and send the updated PDU set QoS profile to an AMF; the AMF, configured to receive the updated PDU set QoS profile sent by the access network device, in which the AMF is further configured to send PDU set QoS profile indication information to an SMF, in which the PDU set QoS profile indication information indicates the updated PDU set QoS profile; and the SMF, configured to receive the PDU set QoS profile indication information sent by the AMF.

Embodiments of the disclosure provide a method for updating a profile. In some embodiments, terms such as "method for updating a profile", "method for information processing", and "communication method" may be used interchangeably; terms such as "apparatus for updating a profile", "apparatus for information processing", and "communication apparatus" may be used interchangeably; and terms such as "system for information processing", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, part of or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", ordinal numbers before "field" in "first field" and "second field" does not limit the position or order between the "fields", and the terms "first" and "second" do not limit whether the "fields" they modify are in the same message, nor do they limit the order of the "first field" and the "second field". For another example, if the descriptive object is "level", the ordinal numbers before "level" in "first level" and "second level" does not limit the priority between the "levels". For another example, a number of descriptive objects is not limited by the ordinal number, and may be one or more. Taking a "first apparatus" as an example, a number of "apparatus" may be one or more. In addition, the objects modified by different prefixes may be the same or different. For example, if the descriptive object is "apparatus", then the "first apparatus" and a "second apparatus" may be the same apparatus or different apparatuses, and their types may be the same or different. For another example, if the descriptive object is "information", then "first information" and "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the "access network device (AN device)" may also be referred to as "radio access network device (RAN device)", "base station (BS)", "radio base station", or "fixed station". In some embodiments, the "AN device" may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, the "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, acquisition of data, information, etc. may comply with laws and regulations of the country to which the data is obtained.

In some embodiments, data, information, etc. may be obtained with consent from users.

In addition, each element, each row, or each column in a table of the embodiments of the disclosure may be implemented as an independent embodiment, and the combination of any elements, any rows, or any columns may also be implemented as an independent embodiment.

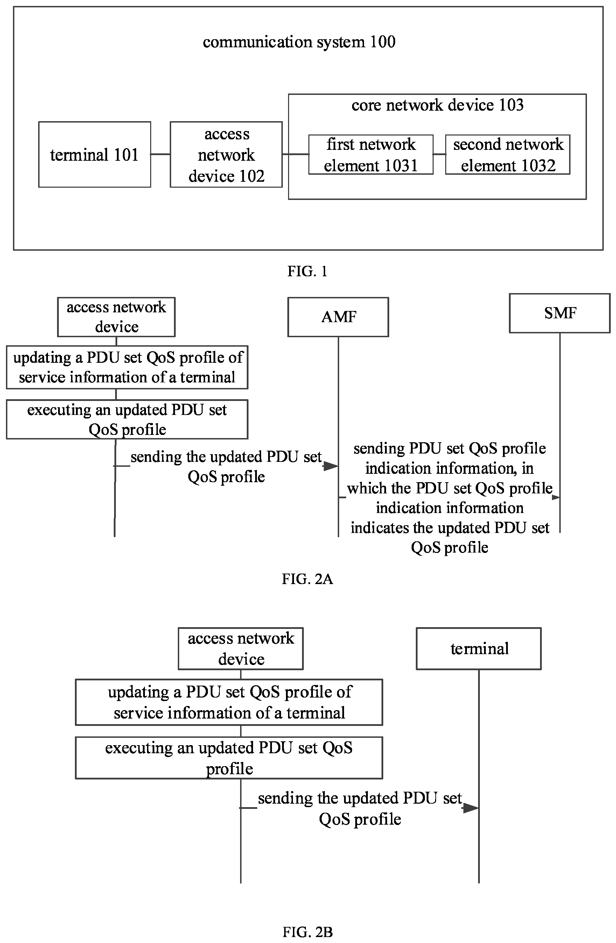

As shown in FIG. 1, the communication system 100 includes a terminal 101, a network device 102 and a core network device 103.

In some embodiments, the terminal 101, for example, may include at least one of a mobile phone, a wearable device, an Internet of Things device, a car with a communication function, a smart car, a Pad, a computer with a wireless transceiving function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device 102 may be, for example, a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud radio access network (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, interfaces between or within access network devices involved in embodiments of the disclosure may become internal interfaces of the Open RAN, and processes and information interactions between these internal interfaces may be implemented through software or programs.

In some embodiments, the access network device may include a central unit (CU) and distributed units (DUs), in which the CU may also be called a control unit. A protocol layer of the access network device may be divided by adopting a CU-DU structure. Part of functions of the protocol layer are centrally controlled by the CU, and part of or all of remaining functions of the protocol layer are distributed in the DUs which are centrally controlled by the CU, but is not limited herein.

In some embodiments, the core network device 103 may be one device, including a first network element 1031, a second network element 1032, etc., or may be a plurality of devices or device groups, respectively including all or part of the first network element 1031, the second network element 1032, etc. A network element may be virtual or physical. The core network may include, for example, at least one of an evolved packet core (EPC), a 5G core network (5GCN), or a next generation core (NGC).

In some embodiments, the first network element is, for example, an AMF.

In some embodiments, the first network element is configured to be "responsible for functions such as terminal identity verification, authentication, registration, mobility management, and connection management", but the name is not limited herein.

In some embodiments, the second network element is, for example, an SMF.

In some embodiments, the second network element is configured to be "responsible for interacting with a decoupled data plane, creating, updating, and deleting a protocol data unit (PDU) session, and managing a session context with a user plane function (UPF)", but the name is not limited to herein.

In some embodiments, a third network element is, for example, a UPF.

In some embodiments, the third network element is configured to "implement user plane services of a 5G network, including but not limited to: air interface, routing, QoS, and security of a network architecture", but the name is not limited to herein.

In some embodiments, the third network element may be independent of the core network device.

In some embodiments, the third network element may be part of the core network device.

It may be understood that the communication system described in the embodiments of the disclosure aims to more clearly illustrate the technical solutions of the embodiments of the disclosure, and does not constitute a limitation on the technical solutions provided in the embodiments of the disclosure. Those skilled in the art may know that with the evolution of the system architecture and the emergence of new service scenarios, the technical solutions provided in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM^{®}), CDMA2000, ultra mobile broadband (UMB), IEEE 802.11 (Wi-Fi^{®}), IEEE 802.16 (WiMAX^{®}), IEEE 802.20, Ultra-WideBand (UWB), Bluetooth^{®}, a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, a plurality of systems may also be combined (for example, a combination of LTE or LTE-A and 5G, etc.) for application.

Services such as mobile media-type services, XR services including cloud AR or virtual reality (VR), cloud gaming, and video-based remote control of machines or drones generate an increasing amount of traffic to the 5G network. The XR services also involve multimodal data streams. The multimodal data is data describing the same service/application input from the same device or different devices (including sensors), and the data may be output to one or more destination devices. Data streams in the multimodal data often have a certain or even strong correlation with each other, such as synchronization of audio and video streams, synchronization of haptics and vision, etc. The data streams of such media services themselves, between the data streams, and transmission requirements of the service data streams on the network all have some common characteristics. Effective identification and utilization of the characteristics will be more conducive to transmission and control of the network and services, and also more conducive to service assurance and user experience.

XRM services and interactive media services require the 5GS to comprehensively consider QoS characteristics of related service data flows (SDFs), such as whether parameters like delay critical GBR data flows, guaranteed flow bit rate (GFBR), packet delay budget (PDB), and default maximum data burst volume (MDBV) may be simultaneously satisfied and coordinated. This ensures consistency in QoS authorization and fulfillment for a plurality of XRM data flows of a single terminal and a plurality of XRM data flows of a plurality of terminals.

For example, in an embodiment of the disclosure, a 5G system may support enhanced functionality of an AF for per PDU set processing of the XRM SDFs. This supports AF-enhanced QoS awareness and assurance for the XRM SDFs, and enhanced user QoE. Further, the AF provides PDU set specific QoS characteristics and protocol description, including: the PDU set specific QoS characteristics; PDU set delay budget (PSDB); PDU set error rate (PSER); and PDU set integrated handling information (PSIHI).

The SMF and the UPF may, in combination with the protocol description and protocol header extension provided by the AF, perform GTP-U header extension for a corresponding PDU in a corresponding SDF PDU set, carrying PDU set information. The PDU set information is used by the NG-RAN for PDU set based QoS handling. The PDU set information includes: a PDU set sequence number; an indication of an end PDU of a PDU set; a PDU sequence number within a PDU set; a PDU set size (in bytes); and PDU set importance, which identifies a relative importance of one PDU set compared to other PDU sets in a QoS flow.

Compared to other ultra-low latency services, the characteristics of XRM services require both ultra-low latency and ultra-high bandwidth QoS assurance. In the current 5G system, per PDU set processing for XRM SDFs and congestion mechanisms such as L4S are supported. These enhanced functional are designed to support enhanced QoS awareness and assurance for XRM SDFs, and enhanced user quality of experience (QoE).

Optionally, in an embodiment of the disclosure, radio resources on an RAN side remain a bottleneck for end-to-end QoS assurance. Addressing how to more effectively fulfill end-to-end QoS requirements, better adapt resource demand and allocation, and coordinate end-to-end (E2E) QoS resources, when QoS for allocation of GBR guaranteed bandwidth or non-GBR non-guaranteed bandwidth for a PDU set cannot be fulfilled due to dynamic conditions of radio resources, may be an issue that the 5G system needs to solve. Thus, how to effectively the fulfill end-to-end QoS requirements, better adapt the resource demand and allocation, and coordinate the E2E QoS resources in response to dynamic conditions of radio air interface resources, for example, when the QoS for allocation of the GBR guaranteed bandwidth or the non-GBR non-guaranteed bandwidth for the PDU set cannot be fulfilled, may be an issue to be solved.

A method and an apparatus for updating a profile, a device, and a storage medium provided in embodiments of the disclosure are described in detail below with reference to the accompanying figures.

FIG. 2A is an interaction schematic interaction diagram illustrating a method for updating a profile according to an embodiment of the disclosure. As shown in FIG. 2A, the method may include the following steps S2101 to S2105.

At step S2101, an access network device updates a PDU set QoS profile of service information of a terminal.

In an embodiment of the disclosure, the access network device may be, for example, an RAN. In some embodiments, the terms such as "radio", "wireless", "RAN", "AN", and "RAN-based" may be interchangeable.

In some embodiments, the names of information or the like are not limited to the names recorded in the embodiments. The terms such as "information", "message", "signal", "signaling", "report", "configuration", "indication", "instruction" "command", "channel", "parameter", "domain", "field", "symbol", "codeword", "codebook", "codepoint", "bit", "data", "program", and "chip" may be used interchangeably.

For example, in an embodiment of the disclosure, the access network device updating the PDU set QoS profile of the service information of the terminal may be, for example, the access network device updating the PDU set QoS profile of the service information of a corresponding terminal.

For example, in an embodiment of the disclosure, the service information includes at least one of: a service session; or a SDF.

For example, in an embodiment of the disclosure, the service information includes the service session.

For example, in an embodiment of the disclosure, the service information includes the SDF. The SDF may be, for example, an XRM SDF.

In an embodiment of the disclosure, the PDU set QoS profile may be, for example, a profile including at least one QoS parameter. The PDU set QoS profile does not specifically refer to a fixed profile. For example, when a parameter type corresponding to the PDU set QoS profile changes, the PDU set QoS profile may also change accordingly. For example, when a certain parameter in the PDU set QoS profile changes, the PDU set QoS profile may also change accordingly.

In an embodiment of the disclosure, different QoS profiles in the PDU set may, for example, correspond to different QoS levels.

Further, in an embodiment of the disclosure, updating the PDU set QoS profile of the service information of the terminal includes: selecting new PDU set QoS profile from an alternative PDU set QoS set.

In some embodiments, "obtain", "acquire", "get", "receive", "transmit", "bi-directionally transmit", "send and/or receive" may be interchangeable, and may be interpreted as many meanings such as receiving from other entities, obtaining from a protocol, obtaining from a higher layer, obtaining by self-processing, autonomous implementation, etc.

The alternative PDU set QoS set may be, for example, a set including at least one PDU set QoS profile. The PDU set QoS set does not specifically refer to a fixed set. For example, when a number of profiles corresponding to the alternative PDU set QoS set changes, the PDU set QoS set may also change accordingly.

Further, in an embodiment of the disclosure, selecting the new PDU set QoS profile from the alternative PDU set QoS set includes: selecting the new PDU set QoS profile from the alternative PDU set QoS set by at least one of the following triggering modes: a PDU set QoS event triggering mode; a resource status triggering mode; a network congestion status triggering mode; a configuration triggering mode; or an operator policy triggering mode.

For example, in an embodiment of the disclosure, the new PDU set QoS profile is selected from the alternative PDU set QoS set by the PDU set QoS event triggering mode.

For example, in an embodiment of the disclosure, the new PDU set QoS profile is selected from the alternative PDU set QoS set by the resource status triggering mode.

For example, in an embodiment of the disclosure, the new PDU set QoS profile is selected from the alternative PDU set QoS set by the network congestion status triggering mode.

For example, in an embodiment of the disclosure, the new PDU set QoS profile is selected from the alternative PDU set QoS set by the configuration triggering mode.

For example, in an embodiment of the disclosure, the new PDU set QoS profile is selected from the alternative PDU set QoS set by the operator policy triggering mode.

For example, in an embodiment of the disclosure, for example, when radio resources become limited, or when available radio resources are more needed, the new PDU set QoS profile may be selected from the alternative PDU set QoS set.

Further, in an embodiment of the disclosure, any PDU set QoS profile in the alternative PDU set QoS set includes at least one of the following parameters: a packet set delay budget; a packet set error rate; a GBR; an averaging window; or a maximum data burst volume.

The GBR includes at least one of: an uplink GBR or a downlink GBR.

The GBR includes the uplink GBR.

The GBR includes the downlink GBR.

Parameters included in any PDU set QoS profile in the alternative PDU set QoS set may be, for example, as shown in Table 1.

**Table 1**

| | |
|---|---|
| parameter set of any PDU set QoS profile in the alternative PDU set QoS set | defining PDU set QoS parameter set for the SDF |
| packet set delay budget | packet set delay budget in the alternative QoS parameter set |
| packet set error rate | packet set error rate in the alternative QoS parameter set |
| UL-guaranteed bit rate | uplink guaranteed bit rate in the alternative PDU set QoS parameter set |
| DL-guaranteed bit rate | downlink guaranteed bit rate in the alternative PDU set QoS parameter set |
| averaging window | averaging window in the alternative PDU set QoS parameter set |
| maximum data burst volume | maximum data burst volume in the alternative PDU set QoS parameter set |

At step S2102, the access network device executes an updated PDU set QoS profile, and sends the updated PDU set QoS profile to an AMF.

In some embodiments, the terms such as "send", "emit", "report", "issue", "transmit", "bi-directionally transmit", "send and/or receive" or the like may be used interchangeably.

In an embodiment of the disclosure, when the access network device updates the PDU set QoS profile of the service information of the terminal, the updated PDU set QoS profile may be obtained. The access network device may execute the updated PDU set QoS profile and send the updated PDU set QoS profile to the AMF.

In an embodiment of the disclosure, sending the updated PDU set QoS profile to the AMF includes: in a case that a GBR QoS flow is configured with PDU set related notification control, and it is determined that PDU set QoS targets of a QoS flow cannot be fulfilled or PDU set QoS targets of the QoS flow are fulfilled again, sending a first message to the AMF, in which the first message includes at least one of: a PDU session identifier or N2 SM information.

For example, in an embodiment of the disclosure, in a case that the GBR QoS flow is configured with PDU set related notification control, and it is determined that the PDU set QoS targets of the QoS flow cannot be fulfilled or the PDU set QoS targets of the QoS flow are fulfilled again, the first message is sent to the AMF, in which the first message includes at least one of: the PDU session identifier or the N2 SM information.

For example, in an embodiment of the disclosure, in a case that the GBR QoS flow is configured with PDU set related notification control, and it is determined that the PDU set QoS targets of the QoS flow cannot be fulfilled or the PDU set QoS targets of the QoS flow are fulfilled again, the first message is sent to the AMF, in which the first message includes at least one of: the PDU session identifier or the N2 SM information.

In some embodiments, the terms such as "certain", "predetermined", "preset", "set", "indicated", "a", "any", "first", or the like may be used interchangeable. "Certain A", "predetermined A", "preset A", "set A", "indicated A", "an A", "any A", "first A" may be interpreted as A predefined in a protocol, or as A obtained via setting, configuration, or indication, or as specific A, certain A, an A, any A, or first A, etc., but is not limited herein.

For example, in an embodiment of the disclosure, the first message may be, for example, a message sent by the access network device to the AMF.

For example, in an embodiment of the disclosure, the first message may, for example, include the PDU session identifier.

For example, in an embodiment of the disclosure, the first message may, for example, include the N2 SM information.

For example, in an embodiment of the disclosure, when the access network device sends the updated PDU set QoS profile to the AMF, it may be, for example, via an initiated PDU session modification.

Further, in an embodiment of the disclosure, the N2 SM information includes at least one of: a QFI; first indication information indicating that the PDU set QoS targets of the QoS flow cannot be fulfilled; or second indication information indicating that the PDU set QoS targets of the QoS flow are fulfilled again.

In an embodiment of the disclosure, the N2 SM information includes the QFI.

In an embodiment of the disclosure, the N2 SM information includes the first indication information indicating that the PDU set QoS targets of the QoS flow cannot be fulfilled.

In an embodiment of the disclosure, the N2 SM information includes the second indication information indicating that the PDU set QoS targets of the QoS flow are fulfilled again.

In an embodiment of the disclosure, the N2 SM information includes the QFI and the first indication information indicating that the PDU set QoS targets of the QoS flow cannot be fulfilled.

In an embodiment of the disclosure, the N2 SM information includes the QFI and the second indication information indicating that the PDU set QoS targets of the QoS flow are fulfilled again.

In an embodiment of the disclosure, the first indication information may be, for example, information indicating that the PDU set QoS targets of the QoS flow cannot be fulfilled. The term "first" in the first indication information is only used to distinguish the first indication information from the second indication information.

For example, in an embodiment of the disclosure, the second indication information may be, for example, information indicating that the PDU set QoS targets of the QoS flow are fulfilled again.

Further, in an embodiment of the disclosure, in a case that it is determined that the PDU set QoS targets of the QoS flow cannot be fulfilled, the N2 SM information indicates a reference to an alternative PDU set QoS profile matching values of PDU set QoS parameters currently being fulfilled by a next generation access network device.

In an embodiment of the disclosure, the next generation access network device may be, for example, an NG-RAN.

Further, in an embodiment of the disclosure, the method further includes: receiving a second message sent by the AMF, in which the second message includes N1 SM container information.

In an embodiment of the disclosure, the second message may be, for example, a message sent by the AMF to the access network device.

At step S2103, the AMF receives the updated PDU set QoS profile sent by the access network device.

In an embodiment of the disclosure, receiving the updated PDU set QoS profile sent by the access network device includes: in a case that a GBR QoS flow is configured with PDU set related notification control, and the access network device determines that PDU set QoS targets of a QoS flow cannot be fulfilled or PDU set QoS targets of a QoS flow are fulfilled again, receiving a first message sent by the access network device, in which the first message includes at least one of: a PDU session identifier or N2 SM information; and sending the first message to an SMF.

In an embodiment of the disclosure, the method further includes: receiving a third message sent by the SMF in response to the first message; and sending a second message to the access network device, in which the second message includes N1 SM container information.

In an embodiment of the disclosure, the third message includes at least one of: the N2 SM information; non access stratum (NAS) information; or the N1 SM container information.

For example, in an embodiment of the disclosure, the third message includes the N2 SM information.

For example, in an embodiment of the disclosure, the third message includes the NAS information.

For example, in an embodiment of the disclosure, the third message includes the N1 SM container information.

At step S2104, the AMF sends PDU set QoS profile indication information to an SMF, in which the PDU set QoS profile indication information indicates the updated PDU set QoS profile.

In an embodiment of the disclosure, the PDU set QoS profile indication information indicates the updated PDU set QoS profile.

For example, in an embodiment of the disclosure, the AMF may send the PDU set QoS profile indication information to the SMF.

For example, in an embodiment of the disclosure, the AMF may send the updated PDU set QoS profile to the SMF.

At step S2105, the SMF receives the PDU set QoS profile indication information sent by the AMF, in which the PDU set QoS profile indication information indicates the updated PDU set QoS profile.

In an embodiment of the disclosure, for example, the SMF may determine the updated PDU set QoS profile based on the PDU set QoS profile indication information.

In an embodiment of the disclosure, the method further includes: subscribing, by a PCF, to an update event for the PDU set QoS profile; and sending a fourth message to the PCF, in which the fourth message includes the updated PDU set QoS profile.

For example, in an embodiment of the disclosure, in response to the PCF subscribing to the update event for the PDU set QoS profile, the fourth message is sent to the PCF, in which the fourth message includes the updated PDU set QoS profile.

For example, in an embodiment of the disclosure, if the PCF subscribes to the update event for the PDU set QoS profile, the fourth message is sent to the PCF, in which the fourth message includes the updated PDU set QoS profile.

For example, in an embodiment of the disclosure, the PCF subscribes to the update event for the PDU set QoS profile, and the SMF may, for example, report a corresponding notification configured for each policy control and charging (PCC) rule to the PCF.

In an embodiment of the disclosure, the method further includes: subscribing, by an AF, to the PDU set QoS profile; and reporting the updated PDU set QoS profile to the AF.

In an embodiment of the disclosure, the method further includes: in a case that a GBR QoS flow is configured with PDU set related notification control, and the access network device determines that PDU set QoS targets of a QoS flow cannot be fulfilled or PDU set QoS targets of a QoS flow are fulfilled again, receiving the first message sent by the AMF, in which the first message includes at least one of: a PDU session identifier or N2 SM information.

In an embodiment of the disclosure, the N2 SM information includes at least one of: a QFI; first indication information indicating that the PDU set QoS targets of the QoS flow cannot be fulfilled; or second indication information indicating that the PDU set QoS targets of the QoS flow are fulfilled again.

In an embodiment of the disclosure, the method further includes: sending a third message to the AMF in response to the first message, in which the third message includes at least one of: the N2 SM information; NAS information; or N1 SM container information.

In some embodiments, the steps S2101 to S2105 are optional, and one or more of the steps may be omitted or substituted in different embodiments.

The communication method in the embodiments of the disclosure may include at least one of the steps S2101 to S2105. For example, the step S2101 may be implemented as an independent embodiment, the step S2101 may be implemented as an independent embodiment, the step S2101 and the step S2102 may be implemented as an independent embodiment, and the steps S2103 to S2105 may be implemented as an independent embodiment, which is not limited herein.

In some embodiments, the steps S2102 to S2105 are optional, and one or more of the steps may be omitted or substituted in different embodiments.

In some embodiments, the steps S2103 to S2105 are optional, and one or more of the steps may be omitted or substituted in different embodiments.

In some embodiments, reference to other optional implementations described before or after the description corresponding to FIG. 2A may be made.

FIG. 2B is an interaction schematic diagram illustrating a method for updating a profile according to an embodiment of the disclosure. In an embodiment of the disclosure, the method shown in FIG. 2B and the method shown in FIG. 2A are parallel solutions. For example, embodiments shown in FIG. 2A and embodiments shown in FIG. 2B may be implemented separately. A difference between the method shown in FIG. 2A and the method shown in FIG. 2B may be, for example, a different object to which a profile is sent.

As shown in FIG. 2B, the method may include the following steps S2201 to S2203.

At step S2201, an access network device updates a PDU set QoS profile of service information of a terminal.

In an embodiment of the disclosure, updating the PDU set QoS profile of the service information of the terminal includes: selecting a new PDU set QoS profile from an alternative PDU set QoS set.

In an embodiment of the disclosure, selecting the new PDU set QoS profile from the alternative PDU set QoS set includes: selecting the new PDU set QoS profile from the alternative PDU set QoS set by at least one of the following triggering modes: a PDU set QoS event triggering mode; a resource status triggering mode; a network congestion status triggering mode; a configuration triggering mode; or an operator policy triggering mode.

In an embodiment of the disclosure, any PDU set QoS profile in the alternative PDU set QoS set includes at least one of the following parameters: a packet set delay budget; a packet set error rate; a GBR; an averaging window; or a maximum data burst volume.

At step S2202, the access network device executes an updated PDU set QoS profile, and sends the updated PDU set QoS profile to the terminal.

At step S2203, the terminal receives the updated PDU set QoS profile sent by the access network device.

In some embodiments, the steps S2201 to S2203 are optional, and one or more of the steps may be omitted or substituted in different embodiments.

In some embodiments, reference to other optional implementations described before or after the description corresponding to FIG. 2B may be made.

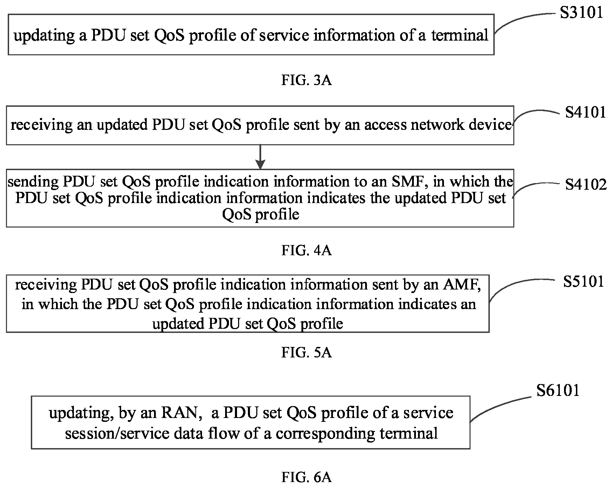

FIG. 3A is a flowchart illustrating a method for updating a profile according to an embodiment of the disclosure. As shown in FIG. 3A, embodiments of the disclosure relate to a method for updating a profile. The method is performed by an access network device. The method includes the following step S3101.

At step S3101, a PDU set QoS profile of service information of a terminal is updated.

In an embodiment of the disclosure, updating the PDU set QoS profile of the service information of the terminal includes: selecting a new PDU set QoS profile from an alternative PDU set QoS set.

In an embodiment of the disclosure, selecting the new PDU set QoS profile from the alternative PDU set QoS set includes: selecting the new PDU set QoS profile from the alternative PDU set QoS set by at least one of the following triggering modes: a PDU set QoS event triggering mode; a resource status triggering mode; a network congestion status triggering mode; a configuration triggering mode; or an operator policy triggering mode.

In an embodiment of the disclosure, any PDU set QoS profile in the alternative PDU set QoS set includes at least one of the following parameters: a packet set delay budget; a packet set error rate; a GBR; an averaging window; or a maximum data burst volume.

In an embodiment of the disclosure, the method further includes: executing an updated PDU set QoS profile, and sending the updated PDU set QoS profile to the terminal.

In an embodiment of the disclosure, the method further includes: executing the updated PDU set QoS profile, and sending the updated PDU set QoS profile to an AMF.

In an embodiment of the disclosure, sending the updated PDU set QoS profile to the AMF includes: in a case that a GBR QoS flow is configured with PDU set related notification control, and it is determined that PDU set QoS targets of a QoS flow cannot be fulfilled or PDU set QoS targets of a QoS flow are fulfilled again, sending a first message to the AMF, in which the first message includes at least one of: a PDU session identifier or N2 SM information.

In an embodiment of the disclosure, the N2 SM information includes at least one of: a QFI; first indication information indicating that the PDU set QoS targets of the QoS flow cannot be fulfilled; or second indication information indicating that the PDU set QoS targets of the QoS flow are fulfilled again.

In an embodiment of the disclosure, in a case that it is determined that the PDU set QoS targets of the QoS flow cannot be fulfilled, the N2 SM information indicates a reference to an alternative PDU set QoS profile matching values of PDU set QoS parameters currently being fulfilled by a next generation access network device.

In an embodiment of the disclosure, the method further includes: receiving a second message sent by the AMF, in which the second message includes N1 SM container information.

It should be noted that, for optional implementations of S3101, reference may be made to optional implementations of S2101 and S2102 in FIG. 2A, optional implementations of S2201 and S2202 in FIG. 2B and other related parts in the embodiments associated with FIG. 2A and FIG. 2B, which are not repeated herein.

FIG. 4A is a flowchart illustrating a method for updating a profile according to an embodiment of the disclosure. As shown in FIG. 4A, embodiments of the disclosure relate to a method for updating a profile. The method is performed by an AMF. The method includes the following steps S4101 to S4102.

At step S4101, an updated PDU set QoS profile sent by an access network device is received.

At step S4201, PDU set QoS profile indication information is sent to an SMF, in which the PDU set QoS profile indication information indicates the updated PDU set QoS profile.

In an embodiment of the disclosure, receiving the updated PDU set QoS profile sent by the access network device includes: in a case that a GBR QoS flow is configured with PDU set related notification control, and the access network device determines that PDU set QoS targets of a QoS flow cannot be fulfilled or PDU set QoS targets of a QoS flow are fulfilled again, receiving a first message sent by the access network device, in which the first message includes at least one of: a PDU session identifier or N2 SM information; and sending the first message to the SMF.

In an embodiment of the disclosure, the method further includes: receiving a third message sent by the SMF in response to the first message; and sending a second message to the access network device, in which the second message includes N1 SM container information.

In an embodiment of the disclosure, the third message includes at least one of: the N2 SM information; NAS information; or the N1 SM container information.

It should be noted that, for optional implementations of S4101 and S4102, reference may be made to optional implementations of S2103 and S2104 in FIG. 2A and other related parts in the embodiments associated with FIG. 2A, which are not repeated herein.

FIG. 5A is a flowchart illustrating a method for updating a profile according to an embodiment of the disclosure. As shown in FIG. 5A, embodiments of the disclosure relate to a method for updating a profile. The method is performed by an SMF. The method includes the following step S5101.

At step S5101, PDU set QoS profile indication information sent by an AMF is received, in which the PDU set QoS profile indication information indicates an updated PDU set QoS profile.

In an embodiment of the disclosure, the method further includes: subscribing, by a PCF, to an update event for a PDU set QoS profile; and sending a fourth message to the PCF, in which the fourth message includes the updated PDU set QoS profile.

In an embodiment of the disclosure, the method further includes: subscribing, by an AF, to the PDU set QoS profile; and reporting the updated PDU set QoS profile to the AF.

In an embodiment of the disclosure, in a case that a GBR QoS flow is configured with PDU set related notification control, and the access network device determines that PDU set QoS targets of a QoS flow cannot be fulfilled or PDU set QoS targets of a QoS flow are fulfilled again, receiving a first message sent by the AMF, in which the first message includes at least one of: a PDU session identifier or N2 SM information.

In an embodiment of the disclosure, the N2 SM information includes at least one of: a QFI; first indication information indicating that the PDU set QoS targets of the QoS flow cannot be fulfilled; or second indication information indicating that the PDU set QoS targets of the QoS flow are fulfilled again.

In an embodiment of the disclosure, the method further includes: sending a third message to the AMF in response to the first message, in which the third message includes at least one of: the N2 SM information; NAS information; or N1 SM container information.

It should be noted that, for optional implementations of S5101, reference may be made to optional implementations of S2105 in FIG. 2A and other related parts in the embodiments associated with FIG. 2A, which are not repeated herein.

FIG. 6A is a flowchart illustrating a method for updating a profile according to an embodiment of the disclosure. As shown in FIG. 6A, embodiments of the disclosure relate to a method for updating a profile. The method includes the following step S6101.

At step S6101, an RAN updates a PDU set QoS profile of a service session/SDF of a corresponding terminal.

For example, a new PDU set QoS profile from an alternative PDU set QoS set may be selected.

At step S6101, the RAN sends an updated PDU set QoS profile to a terminal, a 5G core network (5GC), and an AF.

The (R) AN executes a new PDU set QoS profile or selects an alternative PDU set parameter set, which may be based on at least one of: a PDU set QoS event triggering, a resource status, a network congestion status, a configuration, and/or an operator policy (for example, when radio resources become limited, or when more needed radio resources are available).

For example, in an embodiment of the disclosure, when the new QoS profile is implemented at the RAN, the RAN may report the PDU set QoS profile to the terminal and the 5GC (for example, via an initiated PDU session modification). (When the new PDU QoS profile is implemented at the RAN, the RAN reports the PDU set QoS profile to an SMF.)

For example, in an embodiment of the disclosure, if the AF or an application server has ever subscribed to the current PDU set QoS profile with the 5GC, the 5GC may report to the AF or the application server.

For example, in an embodiment of the disclosure, via an initiated notification control, if a GBR QoS flow is configured with PDU set related notification control, when the (R)AN determines that PDU set QoS targets of a QoS flow cannot be fulfilled or can be fulfilled again respectively, the (R)AN may send an N2 message (a PDU session ID, N2 SM information) to the SMF.

For example, in an embodiment of the disclosure, the N2 SM information may respectively include a QFI and an indication that the PDU set QoS targets of the QoS flow cannot be fulfilled or be fulfilled again.

For example, in an embodiment of the disclosure, when the PDU set QoS targets cannot be fulfilled, the N2 SM information indicates a reference to an alternative PDU set QoS profile matching values of PDU set QoS parameter currently being fulfilled by a next generation radio access network (NG-RAN). An AMF may invoke Nsmf_PDUSession_UpdateSMContext (an SM context ID, the N2 SM information). If a PCF has subscribed to the event, the SMF reports, to the PCF, a corresponding notification configured for each PCC rule.

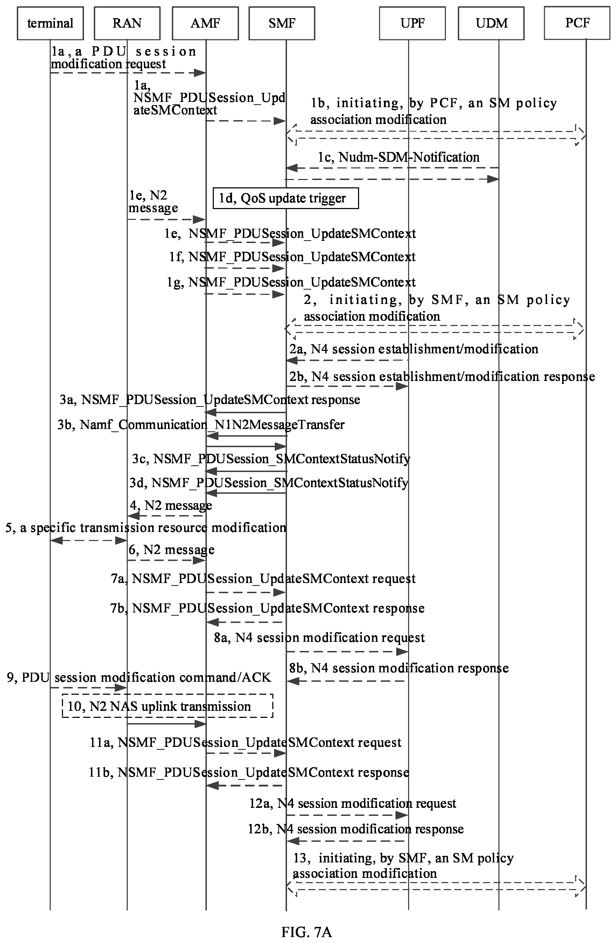

FIG. 7A is a flowchart illustrating a method for updating a profile according to an embodiment of the disclosure. As shown in FIG. 7A, embodiments of the disclosure relate to a method for updating a profile. The method includes the following steps 1a to 13.

At step 1a, a PDU session modification request.

At step 1a, NSMF_PDUSession_UpdateSMContext.

At step 1b, a PCF initiates an SM policy association modification.

At step 1c, Nudm_SDM_Notification.

At step 1d, a QoS update trigger.

At step 1e, an N2 message (a PDU session ID, SM information).

At step le, NSMF_PDUSession_UpdateSMContext.

At step 1f, NSMF_PDUSession_UpdateSMContext.

At step 1g, NSMF_PDUSession_UpdateSMContext.

At step 2, an SMF initiates an SM policy association modification.

At step 2a, an N4 session establishment/modification.

At step 2b, an N4 session establishment/modification response.

At step 3a, an NSMF_PDUSession_UpdateSMContext response.

At step 3b, Namf_Communication_NlN2MessageTransfer.

At step 3c, an NSMF_PDUSession_SMContextStatusNotify.

At step 3d, an NSMF_PDUSession_SMContextStatusNotify, in which a difference between step 3c and step 3d may be, for example, a difference in parameter changes of a core network network element.

At step 4, an N2 message.

At step 5, a specific transmission resource modification (including a PDU session modification command/acknowledgement(ACK)).

At step 6, an N2 message.

At step 7a, an NSMF_PDUSession_UpdateSMContext request.

At step 7b, an NSMF_PDUSession_UpdateSMContext response.

At step 8a, an N4 session modification request.

At step 8b, an N4 session modification response.

At step 9, a PDU session modification command/ACK.

At step 10, an N2 NAS uplink transmission.

At step 11a, an NSMF_PDUSession_UpdateSMContext request.

At step 11b, an NSMF_PDUSession_UpdateSMContext response.

At step 12a, an N4 session modification request.

At step 12b, an N4 session modification response.

At step 13, an SMF initiates an SM policy association modification.

The step 1e includes: (an initiated notification control) if a GBR QoS flow is configured with PDU set related notification control, when the (R)AN determines that PDU set QoS targets of a QoS flow cannot be fulfilled or can be fulfilled again respectively, the (R)AN may send an N2 message (a PDU session ID, N2 SM information) to an SMF.

In an embodiment of the disclosure, the N2 SM information includes a QFI and an indication that PDU set QoS targets for the QoS flow cannot be fulfilled or can be fulfilled again respectively.

In an embodiment of the disclosure, when the PDU set QoS targets cannot be fulfilled, the N2 SM information indicates a reference to an alternative PDU set QoS profile matching values of PDU set QoS parameters currently being fulfilled by an NG-RAN.

In an embodiment of the disclosure, an AMF invokes Nsmf_PDUSession_UpdateSMContext (an SM context ID, the N2 SM information). If a PCF has subscribed to the event, the SMF reports the event to the PCF for each PCC rule configured with notification control.

The step 2 includes: the SMF may need to report some subscribed events to the PCF by performing an SMF-initiated SM policy association modification procedure defined in clause 4.16.5.1. If dynamic PCC is not deployed, the SMF may apply a local policy to decide whether to change a QoS profile. (The SMF reports to the PCF).

The step 2a includes: the SMF may update the UPF with an N4 rule associated with a new or modified QoS flow.

The step 2b includes: responding, by the UPF, to the SMF.

The step 3a includes: for a terminal or an initiated modification, responding, by the SMF, to the AMF via an Nsmf_PDUSession_UpdateSMContext response ([N2 SM information (a PDU session ID, a QFI, a QoS profile, [an alternative QoS profile], [an alternative PDU set QoS profile] (it may be part of the alternative QoS profile or as a parameter separately), [Session AMBR], [CN Tunnel Info]), an N1 SM container (a PDU session modification command (a PDU session ID, a QoS rule, a QoS rule operation, QoS flow profile QoS parameters required for a QoS flow associated with a QoS rule, Session AMBR, [always-on PDU session granted], [port management information container]))).

In an embodiment of the disclosure, the alternative PDU set QoS profile is valid for an initiated modification.

In an embodiment of the disclosure, the N2 SM information carries information that the AMF should provide to the (R)AN. The information may include a QoS profile and a corresponding QFI to notify the (R)AN that one or more QoS flows are added or modified, and may include a corresponding terminal status.

In an embodiment of the disclosure, the N1 SM container carries a PDU session modification command that the AMF should provide to the terminal. The command may include a QoS rule, QoS flow profile QoS parameters required for a QoS flow associated with the QoS rule, and a corresponding QoS rule operation and QoS flow profile QoS parameter operation, to notify a UE that one or more QoS rules are added, removed, or modified.

In an embodiment of the disclosure, the SMF may need to send the PDU session modification command transparently via an NG-RAN to inform a UE about a change in PDU set QoS parameters currently being executed by the NG-RAN after the SMF receives QoS notification control. When the SMF sends on the PDU session modification command transparently via the NG-RAN, the N2 SM information is not included as part of Namf_Communication_N1N2MessageTransfer.

The step 4 includes: the AMF may send an N2 ([N2 SM information received from the SMF], an NAS message (a PDU session ID, an N1 SM container (a PDU session modification command)) message to the (R)AN.

The step 5 includes: the (R)AN may initiate specific (R)AN-specific signaling for processing information interaction with the terminal and the SMF. For example, in a case of an NG-RAN, if the terminal modifies necessary (R)AN resources related to a PDU session, an RRC connection reconfiguration may be performed, or if only the N1 SM container is received from the AMF in the step 4, the RAN only transmits the N1 SM container to the terminal.

In an embodiment of the disclosure, the (R)AN may consider updated CN-assisted RAN parameter tuning to reconfigure AS parameters.

In an embodiment of the disclosure, as part of this step, the N1 SM container is provided to the terminal.

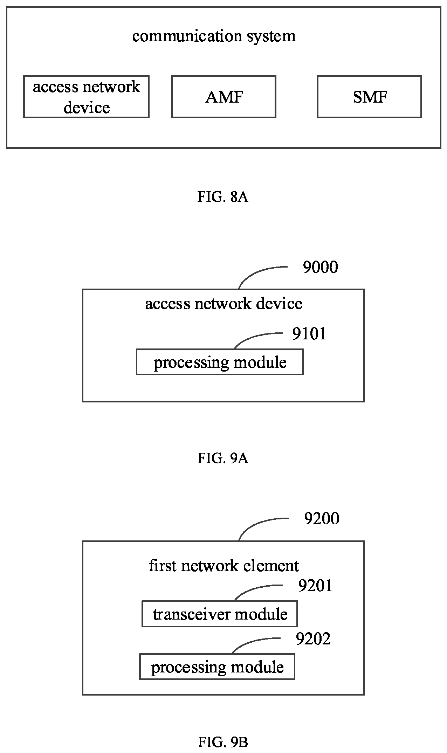

FIG. 8A is a block diagram illustrating a communication system according to an embodiment of the disclosure. The communication system may be configured to perform the method for updating a profile. As shown in FIG. 8A, the communication system includes: an access network device, configured to update a PDU set QoS profile of service information of a terminal, in which the access network device is further configured to execute an updated PDU set QoS profile, and send the updated PDU set QoS profile to an AMF; the AMF, configured to receive the updated PDU set QoS profile sent by the access network device, in which the AMF is further configured to send PDU set QoS profile indication information to an SMF, in which the PDU set QoS profile indication information indicates the updated PDU set QoS profile; and the SMF, configured to receive the PDU set QoS profile indication information sent by the AMF.

In an embodiment of the disclosure, part of or all of the steps and optional implementations thereof may be arbitrarily combined with part of or all of the steps in other embodiments, and may also be arbitrarily combined with optional implementations of other embodiments.

The embodiments of the disclosure also provide an apparatus for implementing any one of the above methods. For example, an apparatus is provided, including units or modules for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Alternatively, the units or the modules in the apparatus may be implemented in the form of a hardware circuit. The functions of part of or all units or modules may be implemented by designing the hardware circuit. The hardware circuit may be understood as one or more processors. For example, in an implementation, the hardware circuit is an application specific integrated circuit (ASIC). The functions of part of or all units or modules are implemented by designing logical relationships of components within the circuit. In another implementation, the hardware circuit may be implemented by a programmable logic device (PLD). Taking a field programmable gate array (FPGA) as an example, it may include a large number of logic gate circuits. The connection relationships between the logic gate circuits are configured via profiles to implement the functions of part of or all units or modules. All units or modules of the above apparatus may be implemented entirely in the form of the processor invoking software, or implemented entirely in the form of the hardware circuit, or partially implemented in the form of the processor invoking software and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed. For example, the processor is a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of part of or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 9A is a block diagram illustrating an access network device according to an embodiment of the disclosure. As shown in FIG. 9A, the access network device 9100 may include a processing module 9101. In some embodiments, the processing module 9101 is configured to update a PDU set QoS profile of service information of a terminal. Alternatively, the processing module 9101 is configured to perform at least one of the communication steps such as sending and/or receiving (e.g., S2101, but is not limited herein) performed by the terminal 101 in any of the above methods, which is not repeated herein.

FIG. 9B is a block diagram illustrating a first network element according to an embodiment of the disclosure. As shown in FIG. 9B, the first network element 9200 may include a transceiver module 9201 and a processing module 9202. In some embodiments, the transceiver module 9201 is configured to receive an updated PDU set QoS profile sent by an access network device, in which the transceiver module is further configured to send PDU set QoS profile indication information to an SMF, in which the PDU set QoS profile indication information indicates the updated PDU set QoS profile.

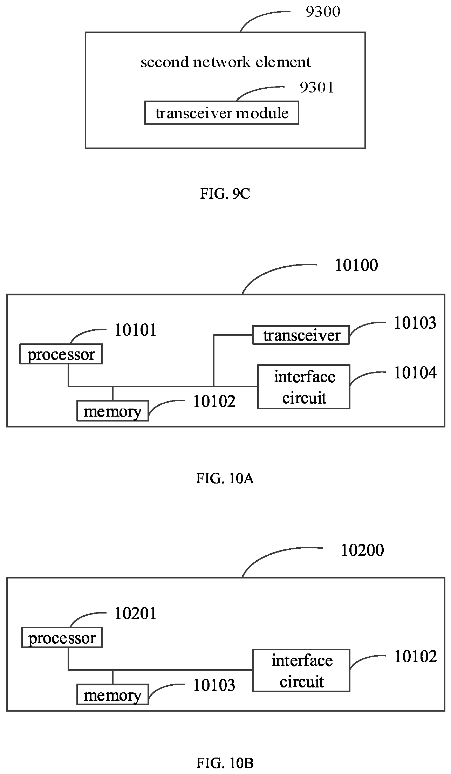

FIG. 9C is a block diagram illustrating a second network element 9300 according to an embodiment of the disclosure. As shown in FIG. 9C, the second network element 9300 may include a transceiver module 9301. In some embodiments, the transceiver module 9301 is configured to receive PDU set QoS profile indication information sent by an AMF, in which the PDU set QoS profile indication information indicates an updated PDU set QoS profile.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules respectively perform all or part of the steps required to be performed by the processing module. Optionally, the processing module may be interchangeable with a processor.

FIG. 10A is a block diagram illustrating a communication device 10100 according to an embodiment of the disclosure. The communication device 10100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 10100 may be configured to implement the method in the above method embodiments. For details, reference may be made to the description in the above method embodiments.

As shown in FIG. 10A, the communication device 10100 may include one or more processors 10101. The processor 10101 may be a general-purpose processor or a special-purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. The communication device 10100 is configured to execute any one of the above methods.

Optionally, the communication device 10100 further includes one or more memories 10102 for storing instructions. Optionally, all or some of the memories 10102 may also be located outside the communication device 10100.

In some embodiments, the communication device 10100 further includes one or more transceivers 10103. When the communication device 10100 includes one or more transceivers 10103, the transceiver 10103 performs at least one of the communication steps such as sending and/or receiving (e.g., S2102, S2103, S2104, S2105, S2202, but is not limited herein) in the above method, and the processor 10101 performs at least one of other steps (e.g., S2101, S2201, but is not limited herein).

In some embodiments, the transceiver may include a receiver and/or a transmitter, which may be separate or integrated together. Optionally, the terms such as transceiver, transceiving unit, transceiver apparatus, transceiving circuit, etc. may be used interchangeably; the terms such as transmitter, transmission unit, transmitting circuit, etc. may be used interchangeably; and the terms such as receiver, receiving unit, transmitter apparatus, receiving circuit, etc. may be used interchangeably.

In some embodiments, the communication device 10100 further includes one or more interface circuits 10104. Optionally, the interface circuit 10104 is connected to the memory 10102. The interface circuit 10104 may be configured to receive signals from the memory 10102 or other devices, and may be configured to send signals to the memory 10102 or other devices. For example, the interface circuit 10104 may read instructions stored in the memory 10102 and send the instructions to the processor 10101.

The communication device 10100 in the above embodiments may be a network device or a terminal, but a scope of the communication device 10100 in the disclosure is not limited to this, and a structure of the communication device 10100 may not be limited by FIG. 10A. The communication device may be an independent device or a part of a larger device. For example, the communication device may be: (1) an independent IC, or a chip, or a chip system or a subsystem; (2) a IC collection including one or more IC, optionally, the IC collection may also include storage components for storing data and computer programs; (3) an ASIC, such as a modem; (4) modules embedded in other devices; (5) a receiver, a terminal, an intelligent terminal, a cellular phone, a wireless device, a handheld phone, a mobile unit, a vehicle-mounted device, a network device, a cloud device, an artificial intelligence device, etc.; (6) others.

FIG. 10B is a block diagram illustrating a chip 10200 according to an embodiment of the disclosure. For a case where the communication device 10100 may be a chip or a chip system, reference may be made to the block diagram of the chip 10200 shown in FIG. 10B, but not limited to this.

The chip 10200 includes one or more processors 10201. The chip 10200 is configured to execute any one of the above methods.

In some embodiments, the chip 10200 further includes one or more interface circuits 10202. The interface circuit 10202 is connected to a memory 10203. The interface circuit 10202 may be configured to receive signals from the memory 10203 or other devices, and may be configured to send signals to the memory 10203 or other devices. For example, the interface circuit 10202 may read the instructions stored in the memory 10202 and send the instructions to the processor 10201.

In some embodiments, the interface circuit 10202 performs at least one of the communication steps such as sending and/or receiving (e.g., S2102, S2103, S2104, S2105, S2202, but is not limited herein) in the above method, and the processor 10201 performs at least one of other steps (e.g., S2101, S2201, but is not limited herein).

In some embodiments, terms such as interface circuit, interface, transceiver pin, transceiver, etc. may be used interchangeably.

In some embodiments, the chip 10200 further includes one or more memories 10203 for storing instructions. Optionally, all or part of the memories 10203 may be located outside the chip 10200.

The disclosure also provides a storage medium for storing instructions. When the instructions are running on the communication device 10100, the communication device 10100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 10100, the communication device 10100 is caused to implement any one of the above methods. Optionally, the above program product is a computer program product.

The disclosure also provides a computer program. When the computer program is running on a computer, the computer is caused to implement any one of the above methods.

## Claims

1. A method for updating a profile, comprising:
updating a packet data unit (PDU) set quality of service (QoS) profile of service information of a terminal.

2. The method according to claim 1, wherein updating the PDU set QoS profile of the service information of the terminal comprises:
selecting a new PDU set QoS profile from an alternative PDU set QoS set.

3. The method according to claim 2, wherein selecting the new PDU set QoS profile from the alternative PDU set QoS set comprises:
selecting the new PDU set QoS profile from the alternative PDU set QoS set by at least one of the following triggering modes:
a PDU set QoS event triggering mode;
a resource status triggering mode;
a network congestion status triggering mode;
a configuration triggering mode; or
an operator policy triggering mode.

4. The method according to claim 2 or 3, wherein any PDU set QoS profile in the alternative PDU set QoS set comprises at least one of the following parameters:
a packet set delay budget;
a packet set error rate;
a guaranteed bit rate (GBR);
an averaging window; or
a maximum data burst volume.

5. The method according to any one of claims 1 to 4, further comprising:
executing an updated PDU set QoS profile, and sending the updated PDU set QoS profile to the terminal.

6. The method according to any one of claims 1 to 4, further comprising:
executing an updated PDU set QoS profile, and sending the updated PDU set QoS profile to an access and mobility management function (AMF).

7. The method according to claim 6, wherein sending the updated PDU set QoS profile to the AMF comprises:
in a case that a GBR QoS flow is configured with PDU set related notification control, and it is determined that PDU set QoS targets of a QoS flow cannot be fulfilled or PDU set QoS targets of a QoS flow are fulfilled again, sending a first message to the AMF, wherein the first message comprises at least one of: a PDU session identifier or N2 session management (SM) information.

8. The method according to claim 7, wherein the N2 SM information comprises at least one of:
a QoS flow identifier (QFI);
first indication information indicating that the PDU set QoS targets of the QoS flow cannot be fulfilled; or
second indication information indicating that the PDU set QoS targets of the QoS flow are fulfilled again.

9. The method according to claim 8, wherein in a case that it is determined that the PDU set QoS targets of the QoS flow cannot be achieved, the N2 SM information indicates a reference to an alternative PDU set QoS profile matching PDU set QoS parameters currently being fulfilled by a next generation access network device.

10. The method according to any one of claims 7 to 9, further comprising:
receiving a second message sent by the AMF, wherein the second message comprises N1 SM container information.

11. A method for updating a profile, comprising:
receiving an updated packet data unit (PDU) set quality of service (QoS) profile sent by an access network device; and
sending PDU set QoS profile indication information to a session management function (SMF), wherein the PDU set QoS profile indication information indicates the updated PDU set QoS profile.

12. The method according to claim 11, wherein receiving the updated PDU set QoS profile sent by the access network device comprises:
in a case that a guaranteed bit rate (GBR) QoS flow is configured with PDU set related notification control, and the access network device determines that PDU set QoS targets of a QoS flow cannot be fulfilled or PDU set QoS targets of a QoS flow are fulfilled again, receiving a first message sent by the access network device, wherein the first message comprises at least one of: a PDU session identifier or N2 session management (SM) information; and
sending the first message to the SMF.

13. The method according to claim 12, further comprising:
receiving a third message sent by the SMF in response to the first message; and
sending a second message to the access network device, wherein the second message comprises N1 SM container information.

14. The method according to claim 13, wherein the third message comprises at least one of:
the N2 SM information;
non access stratum (NAS) information; or
the N1 SM container information.

15. A method for updating a profile, comprising:
receiving packet data unit (PDU) set quality of service (QoS) profile indication information sent by an access and mobility management function (AMF), wherein the PDU set QoS profile indication information indicates an updated PDU set QoS profile.

16. The method according to claim 15, further comprising:
subscribing, by a policy control function (PCF), to an update event for a PDU set QoS profile; and sending a fourth message to the PCF, wherein the fourth message comprises the updated PDU set QoS profile.

17. The method according to claim 15, further comprising:
subscribing, by an application function (AF), to the PDU set QoS profile; and reporting the updated PDU set QoS profile to the AF.

18. The method according to claim 15, further comprising:
in a case that a guaranteed bit rate (GBR) QoS flow is configured with PDU set related notification control, and an access network device determines that PDU set QoS targets of a QoS flow cannot be fulfilled or PDU set QoS targets of the QoS flow are fulfilled again, receiving a first message sent by the AMF, wherein the first message comprises at least one of: a PDU session identifier or N2 session management (SM) information.

19. The method according to claim 18, wherein the N2 SM information comprises at least one of:
a QoS flow identifier (QFI);
first indication information indicating that the PDU set QoS targets of the QoS flow cannot be fulfilled; or
second indication information indicating that the PDU set QoS targets of the QoS flow are fulfilled again.

20. The method according to claim 18, further comprising:
sending a third message to the AMF in response to the first message, wherein the third message comprises at least one of:
the N2 SM information;
non access stratum (NAS) information; or
N1 SM container information.

21. An access network device, comprising:
a processing module, configured to update a packet data unit (PDU) set quality of service (QoS) profile of service information of a terminal.

22. A first network element, comprising:
a transceiver module, configured to receive an updated packet data unit (PDU) set quality of service (QoS) profile sent by an access network device,
wherein the transceiver module is further configured to send PDU set QoS profile indication information to a session management function (SMF), wherein the PDU set QoS profile indication information indicates the updated PDU set QoS profile.

23. A second network element, comprising:
a transceiver module, configured to receive packet data unit (PDU) set quality of service (QoS) profile indication information sent by an access and mobility management function (AMF), wherein the PDU set QoS profile indication information indicates an updated PDU set QoS profile.

24. An access network device, comprising:
one or more processors;
wherein the access network device is configured to implement the method according to any one of claims 1 to 10.

25. A first network element, comprising:
one or more processors;
wherein the first network element is configured to implement the method according to any one of claims 11 to 14.

26. A second network element, comprising:
one or more processors;
wherein the second network element is configured to implement the method according to any one of claims 15 to 20.

27. A communication system, comprising a terminal, an access network device, configured to implement the method for updating the profile according to any one of claims 1 to 10, and a core network device, configured to implement the method for updating the profile according to any one of claims 11 to 14 or 15 to 20.

28. A storage medium storing instructions, wherein the instructions, when executed on a communication device, cause the communication device to implement the method for updating the profile according to any one of claims 1 to 10 or 11 to 14 or 15 to 20.

29. A communication method, comprising:
an access network device, configured to update a packet data unit (PDU) set quality of service (QoS) profile of service information of a terminal,
wherein the access network device is further configured to execute an updated PDU set QoS profile, and send the updated PDU set QoS profile to an access and mobility management function (AMF);
an AMF, configured to receive the updated PDU set QoS profile sent by the access network device,
wherein the AMF is further configured to send PDU set QoS profile indication information to a session management function (SMF), wherein the PDU set QoS profile indication information indicates the updated PDU set QoS profile; and
an SMF, configured to receive the PDU set QoS profile indication information sent by the AMF.
